# EUROPEAN PATENT SPECIFICATION

(11) **EP 4 245 666 B1**
(45) Date of publication and mention of the grant of the patent: **25.06.2025**
(21) Application number: 22163071.8
(22) Date of filing: 18.03.2022
(51) Int. Cl.: B64F 1/35

(54) **GROUND SUPPORT EQUIPMENT**
BODENSTÜTZAUSRÜSTUNG
ÉQUIPEMENT DE SUPPORT AU SOL

(43) Date of publication of application: 20.09.2023
(73) Proprietor: Illinois Tool Works Inc., Glenview, IL 60025 (US)
(72) Inventor: NIELSEN, Bo Vork, Illinois, 60025 (US); DAHL, Søren Risgaard, Illinois, 60025 (US)
(74) Representative: HGF

(56) References cited:
- EP-A1- 3 228 546
- WO-A1-2021/136815
- WO-A1-2021/178161
- CN-A- 107 492 941
- US-A1- 2013 279 212
- US-A1- 2020 346 551
- US-B1- 10 589 635

## Description

This invention relates to a ground support equipment. In particular, the present invention relates to a ground support equipment for powering an aircraft on the ground.

### BACKGROUND

Airports have ground support equipment, such as ground power units, for powering aircraft when parked next to an airport building. This ground-based power supply allows the electronic systems of the aircraft to remain on without needing the aircraft engines to be running which would require additional aviation fuel.

Airports also have a number of powered and non-powered equipment on the tarmac which provide various functions. Powered equipment such as refuelers, tugs, eGPUs and buses, are required periodically throughout the day to move fuel, aircraft and passengers. However, one barrier to wider adoption of electrifying these vehicles is a lack of battery charging capacity at airports.

The present invention seeks to address at least some of these issues.

US2020/346551A1 discloses an airport electric vehicle charging system that includes a current transducer electrically coupled with a power source; a solid state converter electrically coupleable with an aircraft at or near an airport gate and configured to provide and maintain power to the aircraft; and a controller. The system further includes a first feedback loop between the controller and the current transducer; a second feedback loop between the controller and the solid state converter; and a battery charger electrically coupled with the power source and configured to charge one or more electric vehicles. The first feedback loop provides a first feedback signal generated by the current transducer to the controller. The second feedback loop provides a second feedback signal generated by the solid state converter to the controller. The battery charger is configured to consume power from the power source in accordance with the first and second feedback signals.

CN107492941A discloses a charging pile device designed for use with an airport ground power supply. The device comprises a bus, a power input module, a power module, a charging pile module, and a control module. The power input module is connected to the power module via the bus and is configured to access mains power and transmit it to the power module. The charging pile module is connected to both the power module and the power input module through the bus. The control module is connected to the bus, the power input module, the power module, and the charging pile module. The control module is configured to collect data on the power output of the power input module and the load power of the power module. When the difference between the power output of the power input module and the load power of the power module falls within a pre-set range, the control module controls the power input module to supply power to the charging pile module.

### BRIEF SUMMARY OF THE DISCLOSURE

Viewed from a first aspect, the present invention provides a ground support equipment for powering an aircraft on the ground, the ground support equipment comprising: a solid state converter configured to power an aircraft on the ground from an airport power source having a pre-determined maximum power, and a battery charging unit comprising a battery charging unit controller configured to charge an external battery from the airport power source. The solid state converter comprises a solid state converter controller configured to measure an instantaneous power drawn by the aircraft. The solid state converter controller is operatively connected to the battery charging unit controller by a communication channel. The solid state converter controller is configured to communicate a control signal to the battery charging unit for controlling the battery charging unit, the control signal being indicative of a maximum power available for the battery charging unit based on the difference between the pre-determined maximum power of the airport power source and the instantaneous power drawn by the aircraft.

Thus, the present invention provides a ground support equipment which can function as a ground power unit for powering an aircraft on the ground and divert any excess power to a charging port for charging a battery of an electric vehicle at the same time. Thus, the battery of different ground handling equipment or vehicles can be charged when the aircraft does not require the maximum power from the ground support equipment, or when the aircraft does not need powering, such as at night or when no aircraft is present at the gate. As the solid state converter includes a controller for monitoring the power drawn by the aircraft, the present invention does away with the need for additional power controllers to determine how much power can be diverted to the charging port. A further advantage of the present ground support equipment is to utilise the same, either a new or existing, airport power source to power the aircraft's equipment as well as mobile battery powered equipment close to where they are used. This is in contrast to providing double the power infrastructure to power the charging port which would add significant costs to the airport.

The communication channel between the solid state converter controller and the battery charging unit controller allows the battery charging unit controller to receive the control signal from the solid state converter controller. The battery charging unit can therefore provide power to the charging port in a manner that is limited based on the power drawn by the aircraft and based on the known maximum power output of the airport power supply. As the airport power supply has a known power output (i.e. the maximum power output for the airport power supply is pre-determined or pre-set for the airport), the ground support equipment can be pre-set or pre-programmed or manually set to work with the known airport power supply. As such, the present ground support equipment does not have a separate transducer to measure the total power being drawn by the ground support equipment to determine how much power can be drawn by the battery charging unit.

The solid state converter may be configured to receive a user input for setting the pre-determined maximum power. Thus, a ground operator can easily set or adjust the pre-determined maximum power level at the gate based on the requirements of the aircraft and/or based on the known output of the airport power supply.

The control signal may be based on the difference between the pre-determined maximum power level and the current power level drawn by the aircraft. In some cases, the power to the battery charging unit is reduced as power to the aircraft is required. This advantageously reduces the risk of any components being overloaded when there is a high power demand of the aircraft.

The battery charging unit may comprise a plurality of power modules configured to receive power from the airport power source. The plurality of power charging modules may be connected in parallel.

At least one of the plurality of power charging modules may be configured to provide a 30kW output.

At least one of the plurality of charging modules is configured to convert an AC input to a DC output. The battery charging unit may be configured to provide a DC power output. In some cases, the DC power output is a high voltage output.

The ground support equipment may comprise a common rectifier configured to convert an AC input to a DC output. This advantageously provides a DC bus which can be used to power the battery charging unit and any other components of the ground support equipment, such as the solid state converter for powering the aircraft. The DC bus may be configured to provide power to each of the plurality of power charging modules.

The solid state converter may be configured to provide a 400Hz output. The solid state converter may be configured to receive power from an AC power source. The solid state converter may be configured to provide up to 180kW output power. The solid state converter may be pre-fused.

The battery charging unit may be configured to provide an output power of 120kW. The battery charging unit may be configured to provide a DC power output.

The ground support equipment may comprise a plurality of solid state converters configured to provide power to the aircraft. The plurality of solid state converters may be connected in parallel.

### BRIEF DESCRIPTION OF THE DRAWINGS

Embodiments of the invention are further described hereinafter with reference to the accompanying drawings, in which:
Figure 1 illustrates a first side of an exemplary ground support equipment;
Figure 2 illustrates a cross-sectional view of the first side illustrated in Figure 1;
Figure 3 illustrates a second side of the ground support equipment of Figure 1;
Figure 4 illustrates a cross-sectional view of the second side illustrated in Figure 3, and
Figures 5 to 9 are schematic illustrations of exemplary electrical circuits.

### DETAILED DESCRIPTION

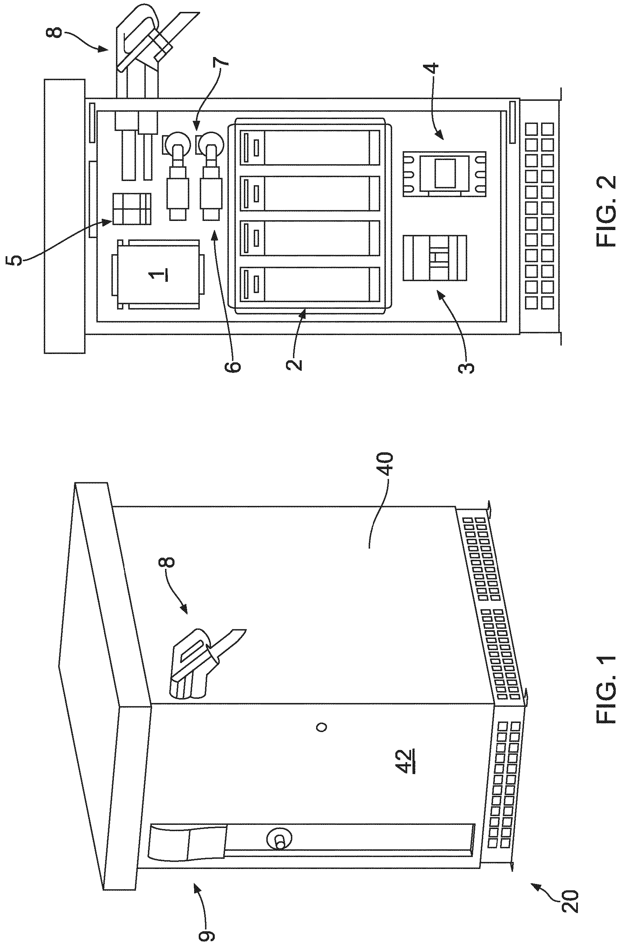

An exemplary ground support equipment 20 is shown in Figure 1. The ground support equipment 20 will typically be installed as a fixed unit on the ground close to where an aircraft will be parked on the ground.

The ground support equipment 20 has a cabinet 40 having a first side 42 of the ground support equipment includes a user interface 9 for a charging port shown in Figure 1 connected to a CCS2 connector 8. By way of example, only a single charging port is shown, but it would be apparent that more than one charging port could be provided in each ground support equipment 20. The charging port may be configured to connect to a CCS2 connector as shown in Figures 1 to 4 or to a CHAdeMO connector. The CCS2 and CHAdeMO connectors are both able to provide DC charging. It would be apparent that these were merely exemplary connectors and that other connectors could be suitable for use with the present ground support equipment.

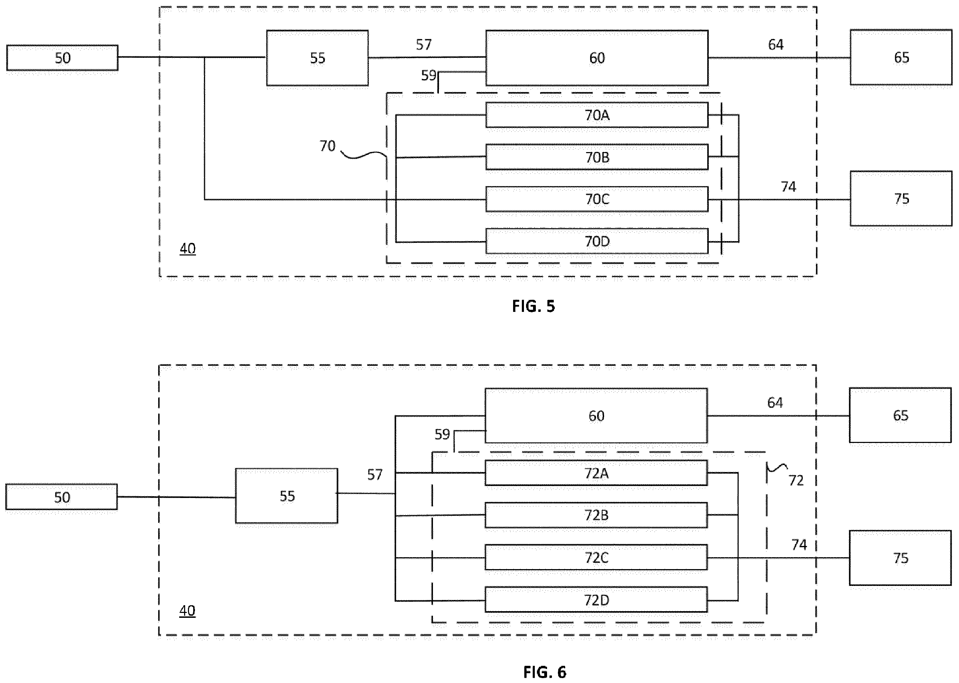

Figure 2 illustrates a panel of the first side 42 removed to show an exemplary electrical circuit of a charging unit which provides the battery charging functionality described herein. A charger control unit 1 is operatively connected to four 30kW charging modules 2. The charging modules 2 may be any of the charging modules 70, 72 explained below with reference to Figures 5 to 9. A moulded case circuit breaker (MCCB) 3 is provided to provide overload protection to the electrical circuit. A charger input contactor 4 is provided adjacent to an Earth leakage supervision relay 5. Two DC fuses 6 with respective DC contactors 7 provide output power for the connector 8. A battery (not shown) of a ground support equipment or vehicle can thus be charged via the connector 8.

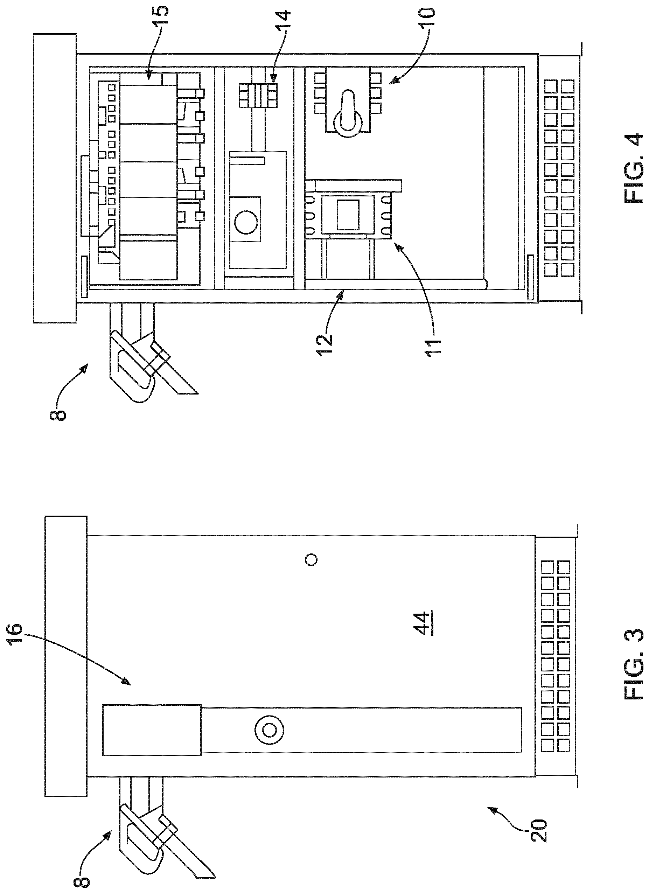

On a second side 44 of the cabinet 40, there is provided a ground power unit (GPU) section for powering the aircraft as shown in Figures 3 and 4. The second side 44 of the cabinet 40 has a user interface 16 for the GPU section. Within the cabinet 40, there is an input breaker 10, an output contactor 11 and an auxiliary power supply 12 for powering the aircraft. The auxiliary power supply 12 is connected to a miniature circuit breaker, MCB, 14. A control unit 13 provided within the cabinet 40 controls the operation of the GPU section. A converter part 15 is also provided for providing the output to the aircraft. The converter part 15 may be any of the solid state converters 60, 62 described below with reference to Figures 5 to 9.

The GPU section includes a solid state converter to control the power supplied to the battery charging unit. As the solid state converter has a pre-set maximum power that it can draw from the airport power source and can monitor the power drawn by the aircraft (if any), the solid state converter can determine how much of the airport power source is surplus to present requirement and divert excess power to the battery charging unit. This can be achieved, for example, based on a control signal that is indicative of the maximum power available for the battery charging unit based on the difference between the known maximum power of the airport power source and the instantaneous power drawn by the aircraft. This would provide near-instantaneous power management within the ground support equipment to ensure power to the aircraft is always prioritised and that the electrical circuit is not overloaded. This advantageously does not require a current transducer or a separate load sharing controller as in the prior art. The present ground support equipment 20 is therefore simpler in design as the controller of the solid state converter is used to detect input current of the ground support equipment as a whole and generate a control signal based on the input current drawn by the solid state converter to determine any remaining power capacity of the airport power source. This control signal can then be transmitted or sent to the battery charging unit to control the amount of power drawn by the charging modules 2, for example from a DC bus 57 when present, as explained below.

In one example, the ground support equipment 20 is pre-fused by an external 200A fuse in the feeder line of the ground support equipment 20, which corresponds to approximately 138kW at 400V mains. In some cases, the GPU section is able to provide 90kW of power. In the illustrated example, four 30kW constant power charging modules 2 are used to generate a total of 120kW. However, it would be apparent that other pre-determined maximum power levels, for example 180kW, could be provided by using a different arrangement of charging modules 2.

The battery charging unit section is illustrated with charging modules 2 connected in parallel, which are powered from the airport power source, for example a 50/60Hz AC power source. In some cases, it is possible to use DC/DC modules powered from a 400Hz internal DC bus which provides an AC power output for the aircraft.

The control unit 13 is able to reduce the power consumption of the battery charging unit to avoid overloading the feeder circuit when there is a high power demand from the GPU section. As the aircraft rarely draws maximum power from the GPU section, there is typically capacity for charging battery-powered ground support equipment or vehicle while 400Hz power is supplied to the aircraft when on the ground. The DC charging is combined with a GPU section in the present ground support equipment 20 to further utilise the existing electrical circuits that are present in GPUs. Specifically, a solid state converter which is able to monitor the power drawn by the aircraft and can control the amount of power that can be drawn by the charging modules 2.

Figures 5 to 9 are schematic illustrations of exemplary electrical circuits which are suitable for implementing the ground support equipment described above. Figure 5 illustrates an electrical circuit within the cabinet 40 described above. The cabinet 40 has an input for an airport power source 50 and an output 64 for an aircraft 65 and a separate output 74 for DC charging a battery-powered ground support equipment 75, such as an electric vehicle in the manner described above. The input 50 is connected to a rectifier 55 which provides a DC bus 57 for a solid state converter 60. The solid state converter 60 has an in-built inverter which provides a suitable output 64 for the aircraft 65, for example 200V AC at 400Hz. The input 50 is also connected to a battery charging unit 70 comprising a series of charging modules 70A-70D each having their own rectifier. The charging modules 70A-70D are connected in parallel and arranged to provide a DC output 74 for charging as explained above. The controller of the solid state converter 60 is operatively connected to the battery charging unit 70 and is able to send a control signal 59 to the battery charging unit 70 in the manner described above.

Figure 6 illustrates an alternative circuit where the rectifier 55 is connected to both the solid state converter 60 and the battery charging unit 72, where the battery charging unit comprises a parallel arrangement of charging modules 72A-72D. In the electrical circuit of Figure 6, the arrangement of charging modules 72A-72D do not require an in-built rectifier, as the AC to DC conversion is provided by rectifier 55. In this example, the DC bus 57 is able to power the charging modules 72A-72D of the battery charging unit 72, the solid state converter 60 and any other components within the ground support equipment. The controller of the solid state converter 60 is operatively connected to the battery charging unit 72 and is able to send a control signal 59 to the battery charging unit 72 in the manner described above.

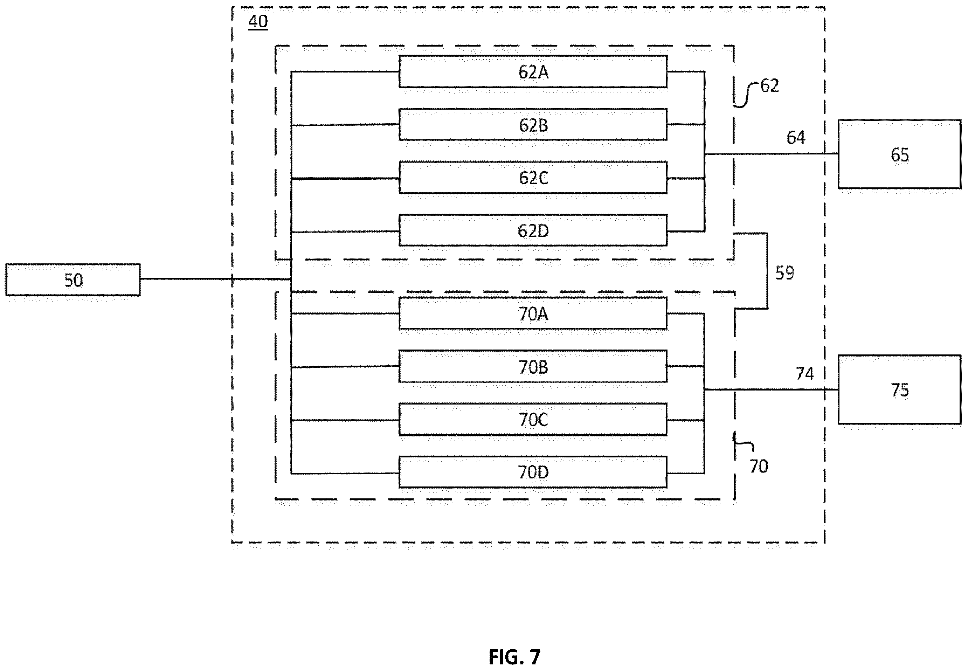

In some cases, the solid state converter and/or the charging modules can have their own in-built rectifier. This advantageously does away with the need to have a separate rectifier 55 to provide a DC bus 57 for powering the respective components. Similarly, it is possible to provide multiple smaller solid state converter modules rather than a single large component. This advantageously allows for the space within the cabinet 40 to be better utilised. Figure 7 illustrate an example, where there is no separate rectifier and the single solid state converter has been replaced by smaller solid state converter modules 62A-62D each with an in-built rectifier. The airport power source 50 is connected to the parallel arrangement of solid state converter modules 62A-62D and also to the parallel arrangement of charging modules 70A-70D of the battery charging unit 70. Charging modules 70A-70D provide power for DC charging as explained above, while the solid state converter modules 62A-62D provide the output 64 for powering the aircraft 65 as explained above. It would be apparent the controller of any of the solid state converter modules 62A-62D is used to provide the control signal 59 to the battery charging unit 70 in the manner described above.

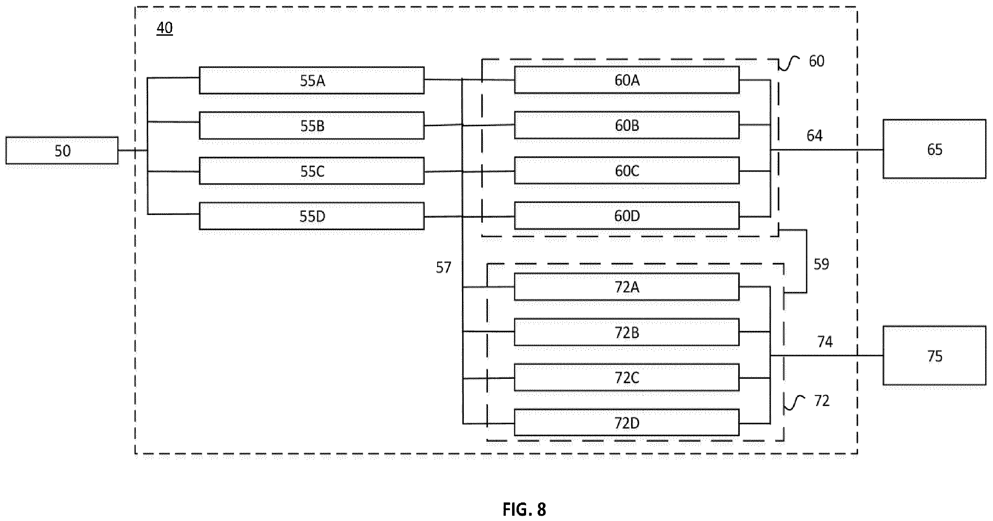

In some cases, the rectifier can be implemented as a series of smaller rectifier modules 55A-55D as shown in Figure 8. This advantageously allows for the space within the cabinet 40 to be better utilised. The rectifier modules 55A-55D are connected in parallel and provide a DC bus 57 for power components within the cabinet 40. Figure 8 illustrates a parallel arrangement of solid state converter modules 60A-60D for providing an output 64 for powering the aircraft 65. In this case, the functionality of a rectifier is separated from the solid state converter modules 60A-60D, so that solid state converter modules 60A-60D without an in-built rectifier can be used with the present ground support equipment. As with Figure 6, the charging modules 72A-72D of the battery charging unit 72 also do not have an in-built rectifier. It would be apparent the controller of any of the solid state converter modules 62A-62D could be used to provide the control signal 59 to the battery charging unit 72 in the manner described above.

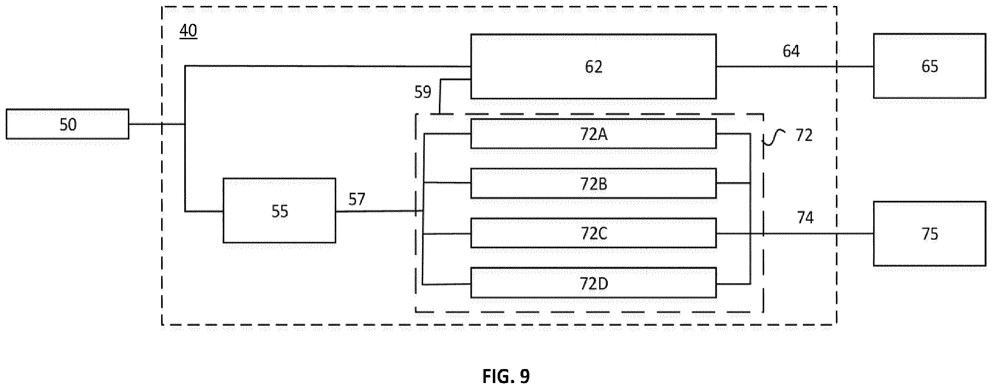

A further electrical circuit is shown in Figure 9. The cabinet 40 includes an input for receiving the airport power source 50, and output ports 64, 74 for the aircraft 65 and the battery charger 75 respectively. In this circuit, a separate rectifier 55 is connected to the airport power source 50 and provides a DC bus 57 for powering the charging modules 72A-72D of the battery charging unit 72 independently of the solid state converter 62. In this case, a single solid state converter 62 is connected directly to the airport power source 50 and includes an in-built rectifier and inverter to provide the output 64 for the aircraft 65. The controller of the solid state converter 62 is operatively connected to the battery charging unit 72 and is able to send a control signal 59 to the battery charging unit 72 in the manner described above.

As will be appreciated by the exemplary circuits shown in Figure 5 to 9, it is possible to use multiple smaller modules in place of a single larger solid state converter, rectifier and/or charging module, although this is not essential. Similarly, it is possible for the solid state converter and/or the charging module(s) to include an in-built rectifier although this is not essential. In some cases, the inverter may be provided as a separate component to the solid state converter.

## Claims

1. A ground support equipment (20) for powering an aircraft on the ground, the ground support equipment comprising:
a solid state converter (60, 62) configured to power an aircraft on the ground from an airport power source (50) having a pre-determined maximum power, and
a battery charging unit (70) controlled by a battery charging unit controller, configured to charge an external battery from the airport power source,
wherein the solid state converter comprises a solid state converter controller configured to measure an instantaneous power drawn by the aircraft,
**characterised in that**
the solid state converter controller is operatively connected to the battery charging unit controller by a communication channel (59); and
wherein the solid state converter controller is configured to communicate a control signal to the battery charging unit controller for controlling the battery charging unit, the control signal being indicative of a maximum power available for the battery charging unit based on the difference between the pre-determined maximum power of the airport power source and the instantaneous power drawn by the aircraft.

2. A ground support equipment according to claim 1, wherein the solid state converter (60, 62) is configured to receive a user input for setting the pre-determined maximum power.

3. A ground support equipment according to claim 1 or 2, wherein the battery charging unit (70, 72) comprises a plurality of charging modules (70A-70D, 72A-72D) configured to receive power from the airport power source (50).

4. A ground support equipment according to claim 3, wherein the plurality of charging modules (70A-70D, 72A-72D) are connected in parallel.

5. A ground support equipment according to claim 2 or 3, wherein at least one of the plurality of charging modules (70A-70D, 72A-72D) are configured to provide a 30kW output.

6. A ground support equipment according to any of claims 3 to 5, wherein at least one of the plurality of charging modules (70A-70D, 72A-72D) is configured to convert an AC input to a DC output (74).

7. A ground support equipment according to any of claims 3 to 5 comprising a common rectifier (55) configured to convert an AC input to a DC output to provide a DC bus (57) for providing power to the battery charging unit (70, 72).

8. A ground support equipment according to claim 7, wherein the DC bus (57) is configured to provide power to each of the plurality of charging modules (70A-70D, 72A-72D)).

9. A ground support equipment according to any preceding claim, wherein the solid state converter (60, 62) is configured to provide a 400Hz output.

10. A ground support equipment according to any preceding claim, wherein the solid state converter (60, 62) is configured to receive power from an AC power source.

11. A ground support equipment according to any preceding claim, wherein the solid state converter (60, 62) is configured to provide up to 180kW output power.

12. A ground support equipment according to any preceding claim, wherein the battery charging unit (70, 72) is configured to provide an output power of 120kW.

13. A ground support equipment according to any preceding claim comprising a plurality of solid state converters (62A-62D) configured to provide power to the aircraft.

14. A ground support equipment according to claim 13, where in the plurality of solid state converters (62A-62D) are connected in parallel.

15. A ground support equipment according to any preceding claim, not comprising a current transducer or a separate load sharing controller.

## Patentansprüche

1. Bodengerät (20) zur Versorgung eines Flugzeugs am Boden mit Strom, wobei das Bodengerät Folgendes aufweist:
einen Solid-State-Wandler (60, 62), der so konfiguriert ist, dass er ein Flugzeug am Boden über eine Flughafenstromquelle (50) einer vorbestimmten maximalen Leistung mit Strom versorgt, und
eine Batterieladeeinheit (70), die durch eine Batterieladeeinheitssteuerung gesteuert wird und so konfiguriert ist, dass sie eine externe Batterie über die Flughafenstromquelle auflädt,
wobei der Solid-State-Wandler eine Solid-State-Wandlersteuerung aufweist, die so konfiguriert ist, dass sie eine vom Flugzeug aufgenommene Momentanleistung misst,
**dadurch gekennzeichnet, dass**
die Solid-State-Wandlersteuerung über einen Kommunikationskanal (59) mit der Batterieladeeinheitssteuerung verbunden ist; und
wobei die Solid-State-Wandlersteuerung so konfiguriert ist, dass sie ein Steuersignal an die Batterieladeeinheitssteuerung zum Steuern der Batterieladeeinheit übermittelt, wobei das Steuersignal basierend auf der Differenz zwischen der vorbestimmten maximalen Leistung der Flughafenstromquelle und der Momentanleistung, die vom Flugzeug aufgenommen wird, eine maximale Leistung anzeigt, die für die Batterieladeeinheit verfügbar ist.

2. Bodengerät nach Anspruch 1, wobei der Solid-State-Wandler (60, 62) so konfiguriert ist, dass er eine Benutzereingabe zum Einstellen der vorbestimmten maximalen Leistung empfängt.

3. Bodengerät nach Anspruch 1 oder 2, wobei die Batterieladeeinheit (70, 72) eine Vielzahl von Lademodulen (70A-70D, 72A-72D) aufweist, die so konfiguriert sind, dass sie Strom von der Flughafenstromquelle (50) erhalten.

4. Bodengerät nach Anspruch 3, wobei die Vielzahl von Lademodulen (70A-70D, 72A-72D) parallel geschaltet ist.

5. Bodengerät nach Anspruch 2 oder 3, wobei zumindest eines der Vielzahl von Lademodulen (70A-70D, 72A-72D) so konfiguriert ist, dass es einen 30-kW-Ausgang bereitstellt.

6. Bodengerät nach einem der Ansprüche 3 bis 5, wobei zumindest eines der Vielzahl von Lademodulen (70A-70D, 72A-72D) so konfiguriert ist, dass es einen Wechselstromeingang in einen Gleichstromausgang (74) umwandelt.

7. Bodengerät nach einem der Ansprüche 3 bis 5, das einen gemeinsamen Gleichrichter (55) aufweist, der so konfiguriert ist, dass er einen Wechselstromeingang in einen Gleichstromausgang umwandelt, um einen Gleichstrombus (57) zur Versorgung der Batterieladeeinheit (70, 72) mit Strom bereitzustellen.

8. Bodengerät nach Anspruch 7, wobei der Gleichstrombus (57) so konfiguriert ist, dass er jedes der Vielzahl von Lademodulen (70A-70D, 72A-72D)) mit Strom versorgt.

9. Bodengerät nach einem der vorhergehenden Ansprüche, wobei der Solid-State-Wandler (60, 62) so konfiguriert ist, dass er einen 400-Hz-Ausgang bereitstellt.

10. Bodengerät nach einem der vorhergehenden Ansprüche, wobei der Solid-State-Wandler (60, 62) so konfiguriert ist, dass er Strom von einer Wechselstromquelle erhält.

11. Bodengerät nach einem der vorhergehenden Ansprüche, wobei der Solid-State-Wandler (60, 62) so konfiguriert ist, dass er eine Ausgangsleistung von bis zu 180 kW liefert.

12. Bodengerät nach einem der vorhergehenden Ansprüche, wobei die Batterieladeeinheit (70, 72) so konfiguriert ist, dass sie eine Ausgangsleistung von 120 kW liefert.

13. Bodengerät nach einem der vorhergehenden Ansprüche, das eine Vielzahl von Solid-State-Wandlern (62A-62D) aufweist, die so konfiguriert sind, das sie das Flugzeug mit Strom versorgen.

14. Bodengerät nach Anspruch 13, wobei die Vielzahl von Solid-State-Wandlern (62A-62D) parallel geschaltet ist.

15. Bodengerät nach einem der vorhergehenden Ansprüche, das keinen Stromwandler oder eine separate Lastteilungssteuerung aufweist.

## Revendications

1. Équipement de support au sol (20) pour alimenter en puissance un aéronef au sol, l'équipement de support au sol comprenant :
un convertisseur à semi-conducteurs (60, 62) configuré pour alimenter en puissance un aéronef au sol à partir d'une source de puissance d'aéroport (50) ayant une puissance maximale prédéterminée, et
une unité de charge de batterie (70) commandée par un dispositif de commande d'unité de charge de batterie, configurée pour charger une batterie externe à partir de la source de puissance d'aéroport,
dans lequel le convertisseur à semi-conducteurs comprend un dispositif de commande de convertisseur à semi-conducteurs configuré pour mesurer une puissance instantanée consommée par l'aéronef,
**caractérisé en ce que**
le dispositif de commande de convertisseur à semi-conducteurs est connecté de manière fonctionnelle au dispositif de commande d'unité de charge de batterie par un canal de communication (59) ; et
dans lequel le dispositif de commande de convertisseur à semi-conducteurs est configuré pour communiquer un signal de commande au dispositif de commande d'unité de charge de batterie pour commander l'unité de charge de batterie, le signal de commande étant indicatif d'une puissance maximale disponible pour l'unité de charge de batterie sur la base de la différence entre la puissance maximale prédéterminée de la source de puissance d'aéroport et la puissance instantanée consommée par l'aéronef.

2. Équipement de support au sol selon la revendication 1, dans lequel le convertisseur à semi-conducteurs (60, 62) est configuré pour recevoir une entrée d'utilisateur pour régler la puissance maximale prédéterminée.

3. Équipement de support au sol selon la revendication 1 ou 2, dans lequel l'unité de charge de batterie (70, 72) comprend une pluralité de modules de charge (70A-70D, 72A-72D) configurés pour recevoir de la puissance depuis la source de puissance d'aéroport (50).

4. Équipement de support au sol selon la revendication 3, dans lequel la pluralité de modules de charge (70A-70D, 72A-72D) sont connectés en parallèle.

5. Équipement de support au sol selon la revendication 2 ou 3, dans lequel au moins un de la pluralité de modules de charge (70A-70D, 72A-72D) est configuré pour fournir une sortie de 30 kW.

6. Équipement de support au sol selon l'une quelconque des revendications 3 à 5, dans lequel au moins l'un de la pluralité de modules de charge (70A-70D, 72A-72D) est configuré pour convertir une entrée CA en une sortie CC (74).

7. Équipement de support au sol selon l'une quelconque des revendications 3 à 5, comprenant un redresseur commun (55) configuré pour convertir une entrée CA en une sortie CC pour fournir un bus CC (57) pour fournir de la puissance à l'unité de charge de batterie (70, 72).

8. Équipement de support au sol selon la revendication 7, dans lequel le bus CC (57) est configuré pour fournir de la puissance à chacun des modules de charge de la pluralité de modules de charge (70A-70D, 72A-72D)).

9. Équipement de support au sol selon l'une quelconque des revendications précédentes, dans lequel le convertisseur à semi-conducteurs (60, 62) est configuré pour fournir une sortie de 400 Hz.

10. Équipement de support au sol selon l'une quelconque des revendications précédentes, dans lequel le convertisseur à semi-conducteurs (60, 62) est configuré pour recevoir de la puissance depuis une source de puissance CA.

11. Équipement de support au sol selon l'une quelconque des revendications précédentes, dans lequel le convertisseur à semi-conducteurs (60, 62) est configuré pour fournir jusqu'à 180 kW de puissance de sortie.

12. Équipement de support au sol selon l'une quelconque des revendications précédentes, dans lequel l'unité de charge de batterie (70, 72) est configurée pour fournir une puissance de sortie de 120 kW.

13. Équipement de support au sol selon l'une quelconque des revendications précédentes, comprenant une pluralité de convertisseurs à semi-conducteurs (62A-62D) configurés pour fournir de la puissance à l'aéronef.

14. Équipement de support au sol selon la revendication 13, dans lequel la pluralité de convertisseurs à semi-conducteurs (62A-62D) sont connectés en parallèle.

15. Équipement de support au sol selon l'une quelconque des revendications précédentes, ne comprenant pas de transducteur de courant ou de dispositif de commande de répartition de charge séparé.
